# NEW EUROPEAN PATENT SPECIFICATION

(11) **EP 1 084 167 B2**
(45) Date of publication and mention of the opposition decision: **18.08.2010**
(45) Mention of the grant of the patent: 04.09.2002
(21) Application number: 99919130.7
(22) Date of filing: 18.05.1999
(51) Int. Cl.: C08G 8/04, C03C 17/32

(54) **STABILIZED AQUEOUS PHENOLIC BINDER FOR MINERAL WOOL AND PRODUCTION OF MINERAL WOOL PRODUCTS**
STABILISIERTE, WÄSSRIGE PHENOLHARZ-BINDEMITTEL FÜR MINERALWOLLE UND VERFAHREN ZUR HERSTELLUNG VON MINERALWOLLEPRODUKTEN
LIANT PHENOLIQUE AQUEUX STABILISE POUR LAINE MINERALE ET PRODUCTION D'ARTICLES EN LAINE MINERALE

(30) Priority: 18.05.1998 DK 67998
(43) Date of publication of application: 21.03.2001
(73) Proprietor: Rockwool International A/S, 2640 Hedehusene (DK)
(72) Inventor: NISSEN, Poul, Christian, DK-3650 Olstykke (DK); HANSEN, Erling, Lennart, DK-2820 Gentofte (DK)
(74) Representative: Barz, Peter
(86) International application number: PCT/DK1999/000274
(87) International publication number: WO 1999/060042

(56) References cited:
- CA-A- 1 001 788
- US-A- 3 870 669
- US-A- 4 748 214
- US-A- 5 371 140
- US-A- 5 670 571
- KIRK-OTHMER: 'Encyclopedia of Chemical Technology', vol. 15, 1969, ED. WILEY & SONS, INC pages 204 - 205

## Description

### 1. BACKGROUND OF THE INVENTION

The present invention relates to a stabilized aqueous phenolic binder for mineral wool; a method of producing an emulsifiable phenolic resin; an emulsifiable phenolic resin obtainable by the method; a method of producing a stabilized phenolic binder for mineral wool; a stabilized phenolic binder obtainable by the method; use of said binder in production of mineral wool products; methods of producing mineral wool products; and mineral wool products obtainable by the methods.

### The Technical Field

It is known that phenolic resins and binders may contain low-reacted and unreacted reactants, e.g. phenol and formaldehyde, which evaporate during the making of the mineral wool and cause pollution problems and reduced efficiency and performance of the binder in various bonding applications. Accordingly, it is desired that the resin is as free as possible from any unconverted starting materials or residues thereof while its useful qualities are preserved.

Methods to achieve this include reacting e.g. phenol with excess of e.g. formaldehyde in presence of an alkaline catalyst to ensure a low content of free phenol and then reacting the excess formaldehyde with an aldehyde scavenger e.g. a nitrogen-containing compound such as urea, melamin or ammonia.

Addition of ammonia further stabilizes the phenolic resin and prevents it from separating into two liquid phases or precipitating out in a solid or crystal phase. Such solid or crystal phases are difficult to dissolve later. Furthermore, the amount of ammonia helps to stabilize the solution in order to achieve a better water dilutability when the resin is to be used in a binder.

Any excess of ammonia, however, causes an undesired emission of ammonia during the application of the binder and the curing of such a binder. Thus, there is a need for a stabilized phenolic binder for mineral wool which does not exhibit this drawback.

### Prior Art Disclosures

WO 96/26 164 discloses a phenolic binder comprising phenol, formaldehyde, a sugar compound, and ammonia for mineral wool products for which emission of ammonia is lowered by adding the sugar compound before addition of ammonia.

US 5 371 140 discloses a stable emulsifiable phenolic resin and a binder for mineral wool products exemplified to have 0.01% by weight of free phenol and 0.6% by weight of formaldehyde. The emulsifying agent is a proteinaceous material such as casein and soya protein in an amount about 0.25% to about 10% by weight. Other emulsifiers include gum arabic, guar gum, Karaya gum, ammonium alginate, polyvinyl alcohol, polyvinyl acetate and carboxylated methylcellulose. Also, combinations of gum arabic and polysaccharides consisting essentially of mannose and galactose units, or D-mannuronic and L-guluronic acid units may be used. The emulsifier prevents crystallisation and makes it possible to store the resin before use. Nothing is indicated or suggested about how to provide a low ammonia emission when curing such binders, nor about use of such emulsifying agents in amounts less than 0.1% by weight. On the contrary, it is stated that below 0.1% by weight, the phenolic resin system loses its water emulsifiability.

US 4 060 504 discloses use of casein as an emulsifier in concentrations from 1 to 12% by weight.

JP 7 268 181 discloses a phenolic resin composition comprising a casein emulsifier, for use for the impregnation and reinforcement of paper- or cloth-based materials, or as a binder for glass fibre and wood chips. Casein may be present in concentrations from 0.1 to 5% by weight together with an anionic surfactant which ensures a stable solution.

Shay et al., "A new class of alkali-swellable association thickeners", JOCCA, Nov. 1993, Journal of the Oil & Color Chemists' Association, discloses so-called HEURASE thickeners combining the chemistries of both alkali-swellable emulsions (ASE) and hydrophobic modified ethoxylate urethanes (HEUR) thickeners. HEURASE thickeners provided under the trade mark Polyphobe® by Union Carbide are known as rheological modifiers in paints but have not been used in binders for mineral wool.

DE 2 330 852 discloses water dilutable aqueous emulsion-and protective colloid-containing dispersions of phenolic resin comprising non-ionic emulsifiers and protective colloids, such as poly vinyl alcohol, added after the formation of the emulsion to protect it, and use thereof e.g. as a binder for mineral wool plates.

### 2. DISCLOSURE OF THE INVENTION

### Object of the Invention

It is an object of the present invention to provide an aqueous phenolic binder for mineral wool which during the making of the mineral wool exhibits a low emission of polluting low molecular weight compounds such as free phenol and free ammonia.

It is another object to provide a phenolic resin for a binder that is stable for transportation and storage for a suitable period of time.

It is still another object to provide an aqueous phenolic binder for the production of mineral wool products which exhibits a low amount of free phenol and free ammonia, and which exhibits a high binding capacity and ensures a good product quality of the mineral wool products.

It is a further object of the present invention to provide an aqueous binder which can be used in the normal processes of applying binders in the production of mineral wool products, and which results in a reduced need of cleaning process equipment.

### A stabilized phenolic binder

In an aspect of the invention, these objects are fulfilled by providing a stabilized aqueous phenolic binder for mineral wool comprising an emulsified phenolic resin consisting essentially of a phenolic resin having a degree of conversion of phenol of 99% or more, the phenolic resin consisting essentially of the reaction product of phenol and aldehyde in a phenol to aldehyde molar ratio of less than 1:1, said binder containing a protective colloidal agent in a concentration of less than 0.1% by weight based on the solid content of the binder.

It surprisingly turns out that a stabilized aqueous phenolic binder for mineral wool according to the invention, comprising an emulsified phenolic resin having a degree of conversion of phenol of about 99% or more, i.e. a phenolic resin of relatively high molecular weight, can be obtained with a low content of unreacted components, e.g. phenol and formaldehyde, and that the emulsified phenolic resin can be stabilized for a sufficient time for transportation and storage thereof for use in the normal production of mineral wool products; said effects being obtained by adding to the binder a protective colloidal agent, in a concentration of less than 0.1% and preferably between 0.1% and 0.005% by weight based on the solid content of the binder.

This method of stabilizing the emulsified phenolic resin only requires addition of a small amount of ammonia, beyond the amount to be added to react with excess formaldehyde, and therefore, the emission of ammonia can be lowered or even avoided.

Also, since the amount of protective colloidal agent is less than 0.1% by weight, good product properties are obtained. Furthermore the use of only a small amount of protective colloidal agent is an economical advantage.

In a preferred embodiment, the content of free phenol is below 0.5% by weight.

Protective colloidal agents are such compounds that are able to surround wholly or partly phenolic resin droplets but which do not invade the internal phase thereof.

In a preferred embodiment, the protective colloidal agent is a polymeric emulsifier and/or a copolymeric emulsifier containing at least one of the groups acryl and urethane.

In another preferred embodiment, the protective colloidal agent is a polymeric emulsifier and/or a copolymeric emulsifier selected from the group consisting of:
a) polymers including:
   polyethylene compounds;
   poly(vinyl acetate);
   poly(vinyl alcohol);
   polycarboxylic acid, such as polyacrylate;
   polysulfonic acids, such as poly(styrenesulfonic acid);
   polyesters, such as glycol polyacrylate;
   polyamids, such as polyacrylamide;
   polyurethanes, such as polyurethane elastomers containing ionic groups, such as -COO⁻, SO₃⁻, and quaternary ammonium, and polyurethanes elastomers containing nonionic hydrophilic groups;
   polyvinylpyrrolidone;
   poly(ethylene oxide);
   polymeric cationic compounds,
   and mixtures thereof; and
b) copolymers including:
   styrene copolymers, such as styrene-acrylate polymers and
   styrene-ethylene oxide polymers; copolymers of polyvinyl and maleic acid compounds, such as styrene-maleic anhydride polymers and vinyl acetate-maleic acid ester polymers;
   polyvinyl-polyalkylene copolymers, such as vinylacetate-ethylene polymers, ethylene-acrylic acid-acrylic acid ester polymers, and ethylene acrylic acid-acrylonitril polymers;
   other vinyl copolymers such as vinyl acetate polymers, acrylic acid- acrylonitrile polymers, acrylic acid-acrylamide polymers, and butadiene-acrylonitril polymers; acrylonitrile-butadiene-styrene polymers (ABS polymers); and mixtures thereof;
   and mixtures of said polymers (a) and copolymers (b).

In a particularly preferred embodiment, the protective colloidal agent is an addition terpolymer consisting of a carboxylic functional monomer X, a relative water-insoluble monomer Y, and a urethane functional associative monomer Z, having the formula

-[X]-[Y]-[Z]-

wherein 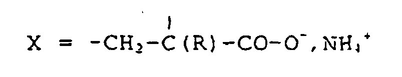 wherein R is H, methyl or ethyl, 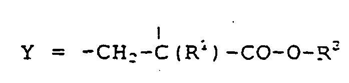 wherein R¹ is H, methyl or ethyl, and R² is methyl, ethyl, propyl or butyl, and 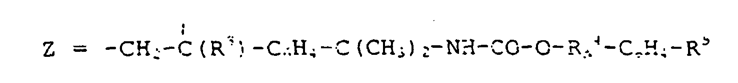 wherein R³ is H, methyl or ethyl, R⁴ is a C₂-C₄ oxylalkylene group and R⁵ a is C₅-C₁₅ group and n is 6-150, preferably 40-60 and more preferably 50.

Within the groups of Z the internal alkoxy group as well as the whole group can be repeated.

In a preferred embodiment, the protective colloidal agent is a modified ethoxylate urethane; such as Polyphobe®.

Examples of such agents available under the trade mark Polyphobe® are preferably Polyphobe® 102, 103, and TR117 supplied by Union Carbide Corporation.

In another preferred embodiment, the protective colloidal agent is a natural emulsifier selected from the group consisting of:
lanolin;
lecithins, albumines and cholesterols, such as egg yolk; waxes, such as bees wax;
lignosulfonates, cellulose and cellulose derivatives, such as cellulose ethers;
proteins, such as casein, whey protein or gelatin; polysaccharides such as starch, dextrin and pectin;
types of rubber, such as natural rubber latex, gum arabic, mastics, tragacanth and guar gum;
mucilages from algea and lichen (alginates), such as carregheenan, agar-agar;
saponins; and
locust bean flower;
and mixtures thereof.

The concentration of the protective colloidal agent is chosen in any suitable amount providing sufficient stability of the emulsified phenolic binder and which amount does not impair its binding properties.

In a preferred embodiment the concentration of the protective colloidal agent is between 0.05 and 0.02% by weight whereby suitable stabilities and binding properties are obtained.

Generally, in the binder according to the invention, the concentration of the preferred phenol and aldehyde is adjusted to a suitable level depending on the application. In a preferred embodiment, the molar ratio of phenol to aldehyde is in the range of 1:2 to 1:6, preferably 1:3 to 1:4.5.

The content of solids depends on the particular application. In a preferred embodiment, the content of solids is 15 to 60% by weight, preferably 20 to 45% by weight of the resin.

The pH of the binder depends on the application. In an aspect, the pH is chosen so as to avoid separation of the emulsified phenolic resin. In a preferred embodiment, the pH is larger than 7 and most preferred in the range of 8 to 10.

Emulsifiable phenolic resins according to the invention ordinarily have a higher molecular weight than the state of the art phenolic resins, such known resins normally having a degree of conversion of phenol less than 99% and typically often a water dilutability larger than 5.5.

In an preferred embodiment the degree of conversion of phenol is equal to or above 99.4%. Preferably equal to or above 99.6%.

Generally, the water dilutability of the phenolic resin is less than or equal to 5. In a preferred embodiment, it is in the range of 0.5 to 5, preferably in the range of 1 to 4, particularly 2 to 4.

Suitable phenolic resins can be prepared by methods known in the art, such methods comprising reacting phenolic components, e.g. phenol with excess of formaldehyde, in the presence of an effective amount of alkaline catalyst for a sufficient reaction time and at a suitable temperature to provide a water dilutability of less than or equal to 5; said preparation optionally being further modified by an additional reaction with urea, melamin and/or dicyandiamide; see e.g. DK-A-4982/88, EP-A-0148050, and US 5 371 140 the contents of which relating to the preparation of phenolic resins are incorporated herein by reference.

Suitable phenols of the phenolic resin according to the invention include (see US 5 371 140) ortho-, para-directing hydroxy or amino aromatic compounds having 6 to 24 carbon atoms such as phenol itself (C₆H₅OH), naphthol, anthranol and substituted derivatives thereof. The substituents on the aromatic compound are independently selected from hydrogen; halogen, such as Cl, Br, and F; NH₂; and hydrocarbon radicals, such as:
(a) alkyl groups or radicals of 1 to 12 carbon atoms, preferably of 1 to 9 carbon atoms, and their various isomeric forms and substituted on the aromatic nucleus in the ortho- and para- position;
(b) cycloalkyl groups of 5 to 12 carbon atoms such as cyclohexyl, cyclopentyl, methylcyclohexyl, butylcyclohexyl, and so forth;
(c) aryl ketonic groups wherein the hydrocarbon portion is as defined below in (e);
(d) alkyl, aryl and cycloalkyl carboxylic groups wherein the hydrocarbon portion is defined as above in (a) and (b) ;
(e) aryl groups of 6 to 24 carbon atoms such as phenyl, naphthyl, anthryl, and the like;
(f) aryl substituted alkyl wherein the aryl is phenyl which may contain lower alkyl and/or hydroxy substituents so that the resulting hydroxy aromatic is, for example, a bisphenol;
(g) the oxyhydrocarbon radicals corresponding to the foregoing hydrocarbon radicals; and
(h) mixtures of the aforesaid hydroxy aromatics.

Suitable substituted phenols include meta-cresol, m-propyl phenol, m-isobutyl phenol, m-sec-butyl phenol, m-tert-butyl phenol, m-bromo phenol, m-chlorc phenol, m-phenyl phenol, m-benzyl phenol, m-cetyl phenol, m-cumyl phenol, m-hydroxyacetophenone, m-hydroxybenzophenone, m-d-limonene phenol. The corresponding phenols substituted in the ortho- and para-positions can be used in part but are not preferred.

Mixtures of various hydroxy aromatic compounds mentioned herein also may be used.

Included among the phenolic reactants which may be used are those known as the "cresylic acids" and these often comprise heterogeneous mixtures having two reacting hydrogen positions on each of them; that is, compounds unsubstituted in the ortho- and para-positions, and hence, yield relatively unreactive resins. These compounds may include the following: 3,5-xylenol, m-cresol, 3,4-xylenol, 2,5-xylenol, 2,3-xylenol, phenol, p-cresol, o-cresol, 2,4-xylenol, and 2,6-xylenol. Cresylic acids or tar acids may include phenol and its homologs which may include cresols, xylenols, trimethyl phenols, ethyl phenols, and higher boiling materials such as dihydroxy phenols, polycyclic phenols and the like. They are often obtained by a low-temperature trimerization of coal, lignite, and the like, or a conventional high-temperature coke oven tar, or the liquid product of petroleum cracking both thermo and catalytic, shell oil, coal hydrogenation products, and the like.

Polyhydroxyaromatic reactants, such as resorcinol, may also be used. Also useful in this invention are mixtures of aniline and phenol to react with an aldehyde or ketone to produce a resole. Additionally, sodium lignosulfonate may also be substituted for a portion of the phenol.

Suitable aldehydes of the phenolic resin according to the invention include (see US 5 371 140) formaldehyde and any of its variations, such as higher concentrations of formalin, such as 30 percent or higher concentrations of formalin, or paraldehyde, acetaldehyde, propionaldehyde, isobutyraldehyde, isopentaldehyde, and the like. The aldehyde should have not more than 8 carbon atoms and should not detrimentally affect the resinification of the resin. Preferred aldehydes are those having from 1 to 4 carbon atoms, such as formaldehyde, which may be in aqueous solution (e.g. 30 percent or higher), or in any of its low polymeric forms such as paraformaldehyde or trioxane. Other aldehydes include para-aldenydes, furfuraldehyde, 2-ethylhexanal, ethylbutyraldehyde, heptaldehyde, benzaldehyde and crotonaldehyde. Glyoxal may also be used. These other aldehydes and mixtures thereof may be used in place of formaldehyde or in partial substitution thereof; but preferably, formaldehyde in one of its commercially available forms is used.

### A method of producing an emulsifiable phenolic resin

In an aspect of the invention, the objects of the invention are fulfilled by providing a method of producing an emulsifiable phenolic resin as defined in claim 1, said method comprising the steps as claimed in claim 13.

It has surprisingly turned out that by reacting the phenolic component, e.g. phenol with formaldehyde, in the presence of an effective amount of alkaline catalyst for a sufficient reaction time and at a suitable temperature to provide a degree of conversion of phenol of 99% or more, a high molecular weight phenolic resin can be produced which upon curing exhibits a low emission of polluting compounds such as free phenol and free ammonia, and which upon addition of < 0.1% by weight of a protective colloidal agent can be stabilized for a sufficient time for the phenolic resin to be kept in solution without separation and without loosing its binding capacity before its use.

Preferred embodiments are claimed in claims 14 and 15.

In a preferred embodiment, ammonia is added in an amount of 60 to 120 l per 1000 kg dry solids, whereby it is ensured that the tendency to separate or form solids or crystals in the resin during storage is reduced, and thereby improving the stability of the formed resin.

### An emulsifiable phenolic resin obtainable by the method

In another aspect according to the invention the objects of the invention are fulfilled by providing an emulsifiable phenolic resin obtainable by the method as claimed in claim 16.

### A method of producing a stabilized phenolic binder

In still another aspect according to the invention the objects of the invention are fulfilled by providing a method of producing a stabilized aqueous phenolic binder for mineral wool as claimed in claim 17.

In a preferred embodiment of the method claimed in claim 17 an aldehyde scavenger, a silane and/or ammonium sulphate are added to the emulsifiable phenolic resin.

### A stabilized phenolic binder obtainable by tine method

In still another aspect according to the invention the objects of the invention are fulfilled by providing a stabilized aqueous phenolic binder obtainable by the method as claimed in claim 21.

### Use of a stabilized phenolic binder for mineral wool

In still another aspect according to the invention the objects of the invention are fulfilled by providing use of a stabilized phenolic binder for mineral wool in the production of a mineral wool product as claimed in claim 22.

### A method of producing a mineral wool product

In still another aspect according to the invention the objects of the invention are fulfilled by providing a method of producing a mineral wool product as claimed in claims 23-24.

### A mineral wool product obtainable by the method

In still another aspect according to the invention the objects of the invention are fulfilled by providing a mineral wool product obtainable by the method as claimed in claim 25.

### 3. DETAILED DESCRIPTION

### Degree of conversion

During the condensation process of the phenolic components samples are taken out in order to measure the content of free phenol. The amount of free phenol is measured by gas chromatography. From these data the degree of conversion is calculated.

### Water dilutability tests

Dionised water is slowly added to a 5 ml sample of the reaction mixture of phenol and aldehyde until a permanent haze develops. The volume of added water divided by five is taken as a measure of the water dilutability.

### Mineral wool product

Generally the mineral wool product is consolidated as a slab, sheet or other shaped article. Products according to the invention may be formulated for any of the conventional purposes of MMV fibres, for instance as slabs, sheets, tubes or other shaped products that are to serve as thermal insulation, fire insulation and protection or noise reduction and regulation, or in appropriate shapes for use as horticultural growing media.

### 4. EXAMPLES

The invention is further illustrated in examples.

### Example A - Production of a stabilized phenolic resin"

In a 1.5 liters double-sided reactor vessel mounted with reflux, thermometer, agitator and inlets was supplied 94 g (1 mol) 60 °C warm phenol, and then 278 g 20 °C formalin having a formaldehyde content of 37%, i.e. corresponding to a formaldehyde-phenol ratio of 3.43:1.

At a temperature of about 35 °C of the mixture, 3.7 g Ca(OH)₂ was added. Then the temperature was increased up to about 80 °C. Following about 10 to 20 minutes the temperature increased to about 84 to 86 °C caused by exothermal reactions.

After about 85 minutes from addition of the catalyst, samples were taken for the determination of the degree of conversion of the phenol.

After reaching a degree of conversion of 99.4 %, 60 g of urea was added and the reaction mixture was cooled to about 60 °C and the solution was kept at 60 °C for 30 minutes and hereafter cooled to 35 °C with a cooling rate of 0,5 °/minute.

After cooling the urea-containing solution, 11 g 25% ammonia solution was added.

The process was stopped by precipitating the alkaline catalyst by addition of ammonium bi-carbonate.

0.019 g corresponding to 0,01 g Polyphobe® based on solid was added to form an emulsifiable stabilized resin.

### Test of stability of the resin

Example A was repeated with various amounts of casein and Polyphobe® (see the following Table 1). The products obtained showed very good stability for amounts of less than about 0.10% of protective colloidal agent based on solid content.

Various amounts of alkaline catalyst were tested, all showing very good stability.

Examples were carried out with different amounts of urea all showing very good stability.

**Table 1**

| Protective colloidal agent | % dry solids | water (ml) | Stable* |
|---|---|---|---|
| Casein | 0.1% | 60 | very |
| Casein | 0.05% | 60 | yes |
| Casein | 0.02% | 60 | yes |
| Polyphobe® | 0.10 | 60 | very |
| Polyphobe® | 0.05 | 60 | very |
| Polyphobe® | 0.02 | 60 | yes |
| Polyphobe® | 0.01 | 60 | yes |
| Polyphobe® | 0.002 | 60 | 8 minutes |

| | | | |
|---|---|---|---|
| * The stability is satisfactory, if the emulsions are stable for at least 20 min. | | | |

### Test of phenol and ammonia emission from binders - full scale test

Resin binders with protective colloids were prepared as described in example A by stopping the condensation reaction at a degree of conversion at 99.4%. Water was added to the resin in order to form a binder. The binders were prepared in a 5 m³ reactor equipped with a jacket, stirrer and reflux.

Emission of phenol and ammonia from production of mineral wool were determined by collecting samples in the exhaust gas and measuring the samples by gas chromatography and ion chromatography. The results of average emissions are shown in Table 2.

It can be concluded that extension of the reaction time in the production of the phenolic resin followed by stabilisation of the phenolic resin of the larger molecular weight by addition of protective colloidal agent according to the invention simultaneously reduces the emissions of both phenol and ammonia.

**Table 2**

| Binder type | Phenol emitted (mg/Nm³) | Ammonia emitted (mg/Nm³) |
|---|---|---|
| Standard binder with no protective colloid | 12 | 82 |
| Binder according to the invention | 6 | 26 |

### Binder strength test - laboratory test

Standard bars of 25 x 10 x 150 mm were prepared of 3% by solid weight of resin as described in example A. Water was added to the resin in order to form a binder. The binder, silane and mineral wool fiber shots were mixed (i.e. mineral wool residues in form of e.g. beads) and cured.

Results of tensile strengths on standard bars under dry and humid conditions are shown in Table 3.

**Table 3**

| % added protective colloid by weight | Dry (MPa) | Humid (MPa) |
|---|---|---|
| 0% | 5.9 | 3.7 |
| Na-caseinate 1% | 5.7 | 2.3 |
| Na-caseinate 0.1% | 6.6 | 3.3 |
| Polyphobe® 0.1% | 5.7 | 2.9 |
| Polyphobe® 0.03% | 6.0 | 3.6 |

### Example B - Production of mineral wool products - full scale test

### Test of product quality

Stone wool products with a density of 150 kg/m³ and containing 3.5% by weight of standard binder including silane or silane-containing binder according to the invention were tested for delamination strength, both for fresh and aged products, i.e. products subjected to 15 minutes in 100% humidity at 121 °C and 1 ato. Results of delamination strength (kPa) are shown in Table 4.

The binders with protective colloids were prepared as described in example A.

The binders without protective colloids were prepared as described in example A but the reaction of the phenol was stopped at a degree of conversion of 98.4% phenol and no protective colloids were added. Also the amount of ammonia added was increased from 11 g to 59 g in order to achieve sufficient stability of the binder.

**Table 4**

| % added protective colloid by weight | Fresh product (kPa) | Aged product (kPa) |
|---|---|---|
| 0 % | 17-18.5 | 8.1-10.3 |
| Na-caseinate 2% | 12.2 | 5.9 |
| Na-caseinate 1% | 13.1 | 5.7 |
| Na-caseinate 0.1% | 15.0 | 7.5 |
| | | |
| Polyphobe® 0.1% | 16.0 | 6.5 |
| Polyphobe® 0.03% | 17.6 | 10.3 |

It appears from table 4 that the addition of protective colloidal agent for achieving a suitable stabilisation of the binder lowers the delamination strength of the tested products compared to products containing no protective colloids.

However, when the protective colloidal agent is added in an amount of less than 0.1% by weight the reduction of the delamination strength is insignificant.

## Claims

1. A stabilized aqueous phenolic binder for mineral wool comprising an emulsified phenolic resin consisting essentially of a phenolic resin having a degree of conversion of phenol of 99% or more, the phenolic resin consisting essentially of the reaction product of phenol and aldehyde in a phenol to aldehyde molar ratio of less than 1:1, said binder containing a protective colloidal agent in a concentration of less than 0.1% by weight based on the solid content of the binder.

2. A binder according to claim 1, wherein the concentration of protective colloidal agent is between 0.1 and 0.005% by weight.

3. A binder according to claim 1 or 2, wherein the phenolic resin has a water dilutability of less than or equal to 5.

4. A binder according to claim 1, 2 or 3, wherein the protective colloidal agent is a polymeric emulsifier and/or a copolymeric emulsifier containing at least one of the groups acryl and urethane.

5. A binder according to any one of claims 1 - 4, wherein the protective colloidal agent is a polymeric emulsifier and/or a copolymeric emulsifier selected from the group consisting of:
a) polymers including:
polyethylene compounds:
poly(vinyl acetate);
poly(vinyl alcohol);
polycarboxylic acids;
polysulfonic acids;
polyesters;
polyamides;
polyurethanes, and polyurethanes elastomers containing non-ionic hydrophilic groups;
polyvinylpyrrolidone;
poly(ethylene oxide);
polymeric cationic compounds,
and mixtures thereof; and
b) copolymers including:
styrene copolymers;
copolymers of polyvinyl and maleic acid compounds;
polyvinyl-polyalkylene copolymers, ethylene-acrylic acid-acrylic acid ester polymers, and ethylene acrylic acid-acrylonitrile polymers;
other vinyl copolymers, acrylic acid-acrylonitrile polymers, acrylic acid-acrylamide polymers, and butadiene-acrylonitrile polymers;
acrylonitrile-butadiene-styrene polymers (ABS polymers); and mixtures thereof;
and mixtures of said polymers (a) and copolymers (b).

6. A binder according to claims 1, 2 or 3, wherein the protective colloidal agent is an addition terpolymer consisting essentially of a carboxylic functional monomer X, a relative water-insoluble monomer, Y, and a urethane functional associative monomer Z, having the formula
-[X]-[Y]-[Z]-
wherein
X = -CH₂C(R)-CO-O⁻, NH₄⁻
wherein R is H, methyl or ethyl, 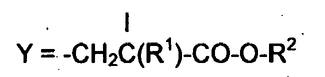 wherein R¹ is H, methyl or ethyl, and R² is methyl, ethyl, propyl or butyl, and 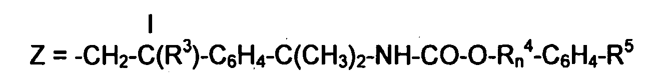 wherein R³ is H, methyl or ethyl, R⁴ is a C₂-C₄ oxyalkylene group and R⁵ is a C₅-C₁₅ group and n is 6 - 150.

7. A binder according to claim 6, wherein the protective colloidal agent is a modified ethoxalate urethane.

8. A binder according to claims 1, 2 or 3, wherein the protective colloidal agent is a natural emulsifier selected from the group consisting of:
lanolin;
lecithins, albumins and cholesterols,
waxes;
lignosulfonates, cellulose and cellulose derivates;
proteins;
polysaccharides;
types of rubber;
mucilages from algae and lichen (alginates);
saponins; and
locust bean flower;
and mixtures thereof.

9. A binder according to any one of claims 1 - 8, wherein the molar ratio of phenol to aldehyde is in the range of 1:2 to 1:6.

10. A binder according to any one of claims 1 - 9, wherein the resin contains 15% to 60% by weight of solids.

11. A binder according to any one of claims 1 - 10, wherein the pH is larger than 7.

12. A binder according to any one of claims 1 - 11, wherein the content of free phenol is below 0.5% by weight.

13. A method of producing an emulsifiable phenolic resin comprising:
a) reacting a phenolic component with formaldehyde in the presence of an effective amount of an alkaline catalyst for a sufficient reaction time and at a suitable temperature to provide a degree of conversion of phenol of 99% or more,
b) cooling the reaction mixture to stop further condensation, and
c) adding less than 0.1 % by weight of a protective colloidal agent.

14. A method according to claim 13, wherein the water dilutability of the cooled reaction mixture of step b) is in the range of 0.5 to 5.

15. A method according to claim 13 or 14, further comprising neutralizing the alkaline catalyst.

16. An emulsifiable phenolic resin obtainable by the method as claimed in claims 13 - 15.

17. A method of producing a stabilized aqueous phenolic binder for mineral wool comprising providing an emulsifiable phenolic resin as defined in claims 1 - 12, or obtainable by the method as claimed in claims 13 - 15; adjusting the pH in the range of 7 to 10, and adding an effective amount of water to form a two-phase system.

18. A method according to claim 17 further comprising adding an aldehyde scavenger.

19. A method according to claim 17, further comprising adding a silane.

20. A method according to claim 17, further comprising adding ammonium sulphate.

21. A stabilized phenolic binder obtainable by the method as claimed in claims 17 - 20.

22. Use of a binder according to claims 1 - 12 in the production of mineral wool products.

23. A method of producing a mineral wool product, said method comprising the steps of:
a) providing a stabilized phenolic binder according to claims 1 - 12;
b) applying the binder to the mineral wool; and
c) curing the binder in the mineral wool.

24. A method according to claim 23, wherein the stabilized aqueous phenolic binder is produced immediately before being applied to said mineral wool.

25. A mineral wool product obtainable by the methods as claimed in claims 23 - 24.

26. A mineral wool product containing 0.5 to 12% by weight of binder according to claims 1 - 12 or claim 21.

## Patentansprüche

1. Stabilisiertes wässriges Phenol-Bindemittel für Mineralwolle, umfassend ein emulgiertes Phenolharz im wesentlichen bestehend aus einem Phenolharz mit einem Phenol-Umsetzungsgrad von 99% oder mehr, wobei das Phenolharz im wesentlichen aus dem Reaktionsprodukt von Phenol und Aldehyd in einem Molverhältnis von Phenol zu Aldehyd von weniger als 1:1 besteht, wobei das Bindemittel ein kolloidales Schutzmittel in einer Konzentration von weniger als 0,1 Gew.-% bezogen auf den Feststoffgehalt des Bindemittels enthält.

2. Bindemittel nach Anspruch 1, wobei die Konzentration des kolloidalen Schutzmittels zwischen 0,1 und 0,005 Gew.-% ist.

3. Bindemittel nach Anspruch 1 oder 2, worin das Phenolharz eine Wasserverdünnbarkeit von weniger als oder gleich 5 aufweist.

4. Bindemittel nach Anspruch 1, 2 oder 3, worin das kolloidale Schutzmittel ein Polymer-Emulgator und/oder ein Copolymer-Emulgator enthaltend mindestens eine der Gruppen Acryl und Urethan ist.

5. Bindemittel nach irgendeinem der Ansprüche 1 bis 4, worin das kolloidale Schutzmittel ein Polymer-Emulgator und/oder ein Copolymer-Emulgator ist, der ausgewählt ist aus der Gruppe bestehend aus:
a) Polymeren einschließlich:
Polyethylen-Verbindungen:
Poly(vinylacetat);
Poly(vinylalkohol);
Polycarbonsäuren;
Polysulfonsäuren;
Polyestern;
Polyamiden;
Polyurethanen und Polyurethan-Elastomeren enthaltend nichtionische hydrophile Gruppen;
Polyvinylpyrrolidon;
Poly(ethylenoxid);
polymeren kationischen Verbindungen,
und Mischungen davon; und
b) Copolymeren einschließlich:
Styrol-Copolymeren;
Copolymeren von Polyvinyl- und Maleinsäure-Verbindungen;
Polyvinyl-Polyalkylen-Copolymeren, Ethylen-Acrylsäure-Acrylsäureester-Polymeren und Ethylen-Acrylsäure-Acrylnitril-Polymeren-,
anderen Vinylcopolymeren, Acrylsäure-Acrylnitril-Polymeren, Acrylsäure-Acrylamid-Polymeren und Butadien-Acrylnitril-Polymeren,
Acrylnitril-Butadien-Styrol-Polymeren (ABS-Polymeren); und Mischungen davon;
und Mischungen der genannten Polymere (a) und Copolymere (b).

6. Bindemittel nach den Ansprüchen 1, 2 oder 3, worin das kolloidale Schutzmittel ein Additionsterpolymer ist, das im wesentlichen besteht aus einem Carboxyl-funktionellem Monomer X, einem relativ wasserunlöslichen Monomer Y, und einem Urethan-funktionellem Assoziationsmonomer Z mit der Formel
-[X]-[Y]-[Z]-
worin
X = -CH₂C(R)-CO-O-, NH₄⁻
worin R H, Methyl oder Ethyl ist, 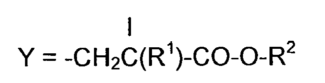 worin R¹ H, Methyl oder Ethyl ist und R² Methyl, Ethyl, Propyl oder Butyl ist, und 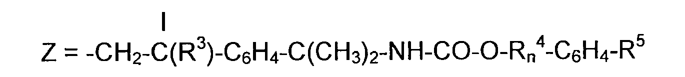 worin R³ H, Methyl oder Ethyl ist, R⁴ eine C₂-C₄-Oxyalkylen-Gruppe ist und R⁵ eine C₅-C₁₅-Gruppe ist und n 6 bis 150 ist.

7. Bindemittel nach Anspruch 6, worin das kolloidale Schutzmittel ein modifiziertes Ethoxalaturethan ist.

8. Bindemittel nach den Ansprüchen 1, 2 oder 3, worin das kolloidale Schutzmittel ein natürlicher Emulgator ist, der ausgewählt ist aus der Gruppe bestehend aus:
Lanolin;
Lecithinen, Albuminen und Cholesterinen,
Wachsen;
Lignosulfonaten, Cellulose und Cellulosederivaten;
Proteinen;
Polysacchariden;
Gummiarten;
Mucilagen von Algen und Lichen (Alginate);
Saponinen; und
Johannisbrotmehl;
und Mischungen davon.

9. Bindemittel nach irgendeinem der Ansprüche 1 bis 8, worin das Molverhältnis von Phenol zu Aldehyd im Bereich von 1:2 bis 1:6 liegt.

10. Bindemittel nach irgendeinem der Ansprüche 1 bis 9, worin das Harz 15% bis 60 Gew.-% an Feststoffen enthält.

11. Bindemittel nach irgendeinem der Ansprüche 1 bis 10, worin der pH größer als 7 ist.

12. Bindemittel nach irgendeinem der Ansprüche 1 bis 11, worin der Gehalt an freiem Phenol unter 0,5 Gew.-% beträgt.

13. Verfahren zur Herstellung eines emulgierbaren Phenolharzes, umfassend:
a) das Umsetzen einer Phenol-Komponente mit Formaldehyd in Anwesenheit einer wirksamen Menge von einem alkalischen Katalysator über eine ausreichende Reaktionszeit und bei einer geeigneten Temperatur, um einen Phenol-Umsetzungsgrad von 99% oder mehr zu erhalten,
b) das Kühlen der Reaktionsmischung, um weitere Kondensation zu stoppen, und
c) die Zugabe von weniger als 0,1 Gew.-% eines kolloidalen Schutzmittels.

14. Verfahren nach Anspruch 13, worin die Wasserverdünnbarkeit der gekühlten Reaktionsmischung von Schritt b) im Bereich von 0,5 bis 5 liegt.

15. Verfahren nach Anspruch 13 oder 14, ferner umfassend das Neutralisieren des alkalischen Katalysators.

16. Emulgierbares Phenolharz, erhältlich durch das Verfahren wie in den Ansprüchen 13 bis 15 beansprucht.

17. Verfahren zur Herstellung eines stabilisierten wässrigen Phenol-Bindemittels für Mineralwolle, umfassend das Bereitstellen eines emulgierbaren Phenolharzes wie in den Ansprüchen 1 bis 12 definiert oder erhältlich durch das Verfahren wie in den Ansprüchen 13 bis 15 beansprucht; das Einstellen des pH in einem Bereich von 7 bis 10 und das Zugeben einer wirksamen Menge von Wasser, um ein Zweiphasensystem zu bilden.

18. Verfahren nach Anspruch 17, ferner umfassend das Zugeben eines Aldehyd-Fängers.

19. Verfahren nach Anspruch 17, ferner umfassend das Zugeben eines Silans.

20. Verfahren nach Anspruch 17, ferner umfassend das Zugeben von Ammoniumsulfat.

21. Stabilisiertes Phenol-Bindemittel, erhältlich durch das Verfahren wie in den Ansprüchen 17 bis 20 beansprucht.

22. Verwendung eines Bindemittels nach den Ansprüchen 1 bis 12 bei der Herstellung von Mineralwollprodukten.

23. Verfahren zur Herstellung eines Mineralwollprodukts, wobei das Verfahren folgende Schritte umfasst:
a) das Bereitstellen eines stabilisierten Phenol-Bindemittels nach den Ansprüchen 1 bis 12;
b) das Aufbringen des Bindemittels auf die Mineralwolle; und
c) das Härten des Bindemittels in der Mineralwolle.

24. Verfahren nach Anspruch 23, worin das stabilisierte wässrige Phenol-Bindemittel unmittelbar bevor es auf die Mineralwolle aufgebracht wird hergestellt wird.

25. Mineralwollprodukt, erhältlich durch die Verfahren wie in den Ansprüchen 23 bis 24 beansprucht.

26. Mineralwollprodukt, enthaltend 0,5 bis 12 Gew.-% Bindemittel nach den Ansprüchen 1 bis 12 oder nach Anspruch 21.

## Revendications

1. Liant phénolique aqueux stabilisé pour laine minérale comprenant une résine phénolique émulsifiée se composant essentiellement d'une résine phénolique ayant un degré de conversion du phénol de 99 % ou plus, la résine phénolique se composant essentiellement du produit réactionnel du phénol et d'un aldéhyde selon un rapport molaire phénol/aldéhyde inférieur à 1/1, ledit liant contenant un agent colloïdal protecteur dans une concentration inférieure à 0,1 % en poids sur la base de la teneur en matière solide du liant.

2. Liant selon la revendication 1, dans lequel la concentration en agent colloïdal protecteur est comprise entre 0,1 et 0,005 % en poids.

3. Liant selon la revendication 1 ou 2, dans lequel la résine phénolique a un pouvoir de dilution dans l'eau inférieur ou égal à 5.

4. Liant selon la revendication 1, 2 ou 3, dans lequel l'agent colloïdal protecteur est un émulsifiant polymère et/ou un émulsifiant copolymère contenant au moins l'un des groupes acryle et uréthane.

5. Liant selon l'une quelconque des revendications 1 à 4, dans lequel l'agent colloïdal protecteur est un émulsifiant polymère et/ou un émulsifiant copolymère choisi dans le groupe se composant des éléments suivants :
a) polymères incluant :
des composés de polyéthylène ;
du polyacétate de vinyle ;
de l'alcool polyvinylique ;
de l'acide polycarboxylique ;
des acides polysulfoniques ;
des polyesters ;
des polyamides ;
des polyuréthanes et des élastomères de polyuréthanes contenant des groupes hydrophiles non ioniques ;
de la polyvinylpyrrolidone ;
de l'oxyde de polyéthylène ;
des composés cationiques polymères,
et des mélanges de ceux-ci ; et
b) copolymères incluant :
des copolymères de styrène ;
des copolymères de polyvinyle et de composés d'acide maléique ;
des copolymères de polyvinyle-polyalkylène, des polymères d'éthylène-acide acrylique-ester d'acide acrylique et des polymères d'éthylèneacide acrylique-acrylonitrile ;
d'autres copolymères de vinyle, des polymères d'acide acrylique-acrylonitrile, des polymères d'acide acrylique-acrylamide et des polymères de butadiène-acrylonitrile ;
des polymères d'acrylonitrile-butadiène-styrène (polymères ABS) ; et des mélanges de ceux-ci ;
et des mélanges desdits polymères (a) et copolymères (b).

6. Liant selon les revendications 1, 2 ou 3, dans lequel l'agent colloïdal protecteur est un terpolymère additionnel se composant essentiellement d'un monomère fonctionnel carboxylique X, d'un monomère relatif insoluble dans l'eau Y, et d'un monomère Z associatif fonctionnel de l'uréthane de formule :
-[X]-[Y]-[Z]-
dans laquelle
X = -CH₂C(R)-CO-O⁻, NH₄⁺
dans laquelle R est H, le méthyle ou l'éthyle, 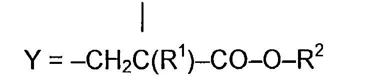 dans laquelle R¹ est H, le méthyle ou l'éthyle, et R² est le méthyle, l'éthyle, le propyle ou le butyle, et 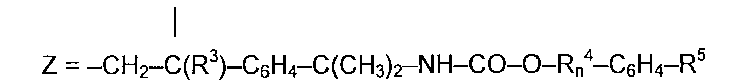 dans laquelle R³ est H, le méthyle ou l'éthyle, R⁴ est un groupe oxyalkylène en C₂ à C₄ et R⁵ est un groupe en C₅ à C₁₅ et n est compris entre 6 et 150.

7. Liant selon la revendication 6, dans lequel l'agent colloïdal protecteur est un uréthane d'éthoxalate modifié.

8. Liant selon les revendications 1, 2 ou 3, dans lequel l'agent colloïdal protecteur est un émulsifiant naturel choisi dans le groupe se composant des éléments suivants :
lanoline ;
lécithines, albumines et cholestérols, cires ;
lignosulfates, cellulose et dérivés de la cellulose ;
protéines ;
polysaccharides ;
types de caoutchouc ;
mucilages provenant d'algues et de lichens (alginates) ;
saponines ; et
fleur de caroube ;
et des mélanges de ceux-ci.

9. Liant selon l'une quelconque des revendications 1 à 8, dans le rapport molaire phénol/aldéhyde se situe dans la plage allant de 1/2 à 1/6.

10. Liant selon l'une quelconque des revendications 1 à 9, dans lequel la résine contient de 15 % à 60 % en poids de matières solides.

11. Liant selon l'une quelconque des revendications 1 à 10, dans lequel le pH est supérieur à 7.

12. Liant selon l'une quelconque des revendications 1 à 11, dans lequel la teneur en phénol libre est inférieure à 0,5 % en poids.

13. Procédé de production d'une résine phénolique émulsifiable comprenant :
a) la réaction d'un composant phénolique avec du formaldéhyde en présence d'une quantité efficace d'un catalyseur alcalin pendant un temps de réaction suffisant à une température adaptée pour fournir un degré de conversion du phénol de 99 % ou plus,
b) le refroidissement du mélange réactionnel pour arrêter toute autre condensation, et
c) l'ajout de moins de 0,1 % en poids d'un agent colloïdal protecteur.

14. Procédé selon la revendication 13, dans lequel le pouvoir de dissolution dans l'eau du mélange réactionnel refroidi de l'étape b) se situe dans la plage allant de 0,5 à 5.

15. Procédé selon la revendication 13 ou 14, comprenant en outre la neutralisation du catalyseur alcalin.

16. Résine phénolique émulsifiable pouvant être obtenue par le procédé selon les revendications 13 à 15.

17. Procédé de production un liant phénolique aqueux stabilisé pour laine minérale comprenant l'utilisation d'une résine phénolique émulsifiable selon les revendications 1 à 12, ou pouvant être obtenue par le procédé selon les revendications 13 à 15 ; l'ajustement du pH dans la plage allant de 7 à 10 et l'ajout d'une quantité efficace d'eau pour former un système biphasique.

18. Procédé selon la revendication 17, comprenant en outre l'ajout d'un inhibiteur de l'aldéhyde.

19. Procédé selon la revendication 17, comprenant en outre l'ajout d'un silane.

20. Procédé selon la revendication 17, comprenant en outre l'ajout de sulfate d'ammonium.

21. Liant phénolique stabilisé pouvant être obtenu par le procédé selon les revendications 17 à 20.

22. Utilisation d'un liant selon les revendications 1 à 12 dans la production d'articles en laine minérale.

23. Procédé de production d'un article en laine minérale, ledit procédé comprenant les étapes consistant à :
a) fournir un liant phénolique stabilisé selon les revendications 1 à 12 ;
b) appliquer le liant sur la laine minérale ; et
c) faire durcir le liant dans la laine minérale.

24. Procédé selon la revendication 23, dans lequel le liant phénolique aqueux stabilisé est produit immédiatement avant d'être appliqué sur ladite laine minérale.

25. Article en laine minérale pouvant être obtenu par les procédés selon les revendications 23 et 24.

26. Article en laine minérale contenant de 0,5 à 12 % en poids de liant selon les revendications 1 à 12 ou la revendication 21.
